(19) Europäisches Patentamt
European Patent Office
Office européen des brevets

(11) **EP 1 317 853 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(21) Anmeldenummer: **01966999.3**

(22) Anmeldetag: **09.08.2001**

(51) Int Cl.:
**H04N 5/335** (2006.01)

(86) Internationale Anmeldenummer:
**PCT/DE2001/003085**

(87) Internationale Veröffentlichungsnummer:
**WO 2002/021828 (14.03.2002 Gazette 2002/11)**

(54) **KOMBINIERTE STANDARD-VIDEO- UND HIGH-SPEED-KAMERA**

COMBINED STANDARD VIDEO AND HIGH-SPEED CAMERA

CAMERA VIDEO STANDARD ET A GRANDE VITESSE COMBINEE

(84) Benannte Vertragsstaaten:
**DE FR GB NL**

(30) Priorität: **06.09.2000 DE 10043961**

(43) Veröffentlichungstag der Anmeldung:
**11.06.2003 Patentblatt 2003/24**

(73) Patentinhaber: **Fraunhofer-Gesellschaft zur Förderung der angewandten Forschung e.V.
80686 München (DE)**

(72) Erfinder:
• **BLOSS, Hans
90562 Heroldsberg (DE)**

• **GICK, Stephan
96215 Lichtenfels (DE)**

(74) Vertreter: **Gagel, Roland
Patentanwalt Dr. Roland Gagel
Landsberger Strasse 480a
81241 München (DE)**

(56) Entgegenhaltungen:
**US-A- 5 303 051**

• **PATENT ABSTRACTS OF JAPAN vol. 1999, no. 05, 31. Mai 1999 (1999-05-31) -& JP 11 032241 A (SONY CORP), 2. Februar 1999 (1999-02-02)**

**Beschreibung**

Die vorliegende Erfindung bezieht sich auf eine Kamera, die für eine gleichzeitige Erzeugung von Standard-Video- und High-Speed-Videosequenzen geeignet ist.

Eine derartige Kamera kann beispielsweise in der TV-Produktion, bei Technik-, Natur- und Tierfilmproduktionen und bei Sportaufzeichnungen, insbesondere auch für Trainingszwecke, sinnvoll eingesetzt werden.

Video-Kameras für Consumeranwendungen und TV-Produktionen müssen aus Kompatibilitätsgründen weitgehend den dafür existierenden Standards entsprechen. Diese Standards legen beispielsweise Bildformat, Zeilenzahl und Bildfrequenz fest. Durch die Bildfrequenz oder "frame rate" wird die Belichtungszeit der einzelnen Videosequenzbilder festgelegt. Die Bildfrequenz beträgt 25 Hz im europäischen (PAL-Norm) und 30 Hz im amerikanischen Raum (NTSC, "National Television Systems Committee"). Andere Länder haben meist einen der beiden Standards übernommen.

Auch neue hochauflösende Standards wie HDTV (High Definition TV) legen die Bildfrequenz mit 24 Hz fest.

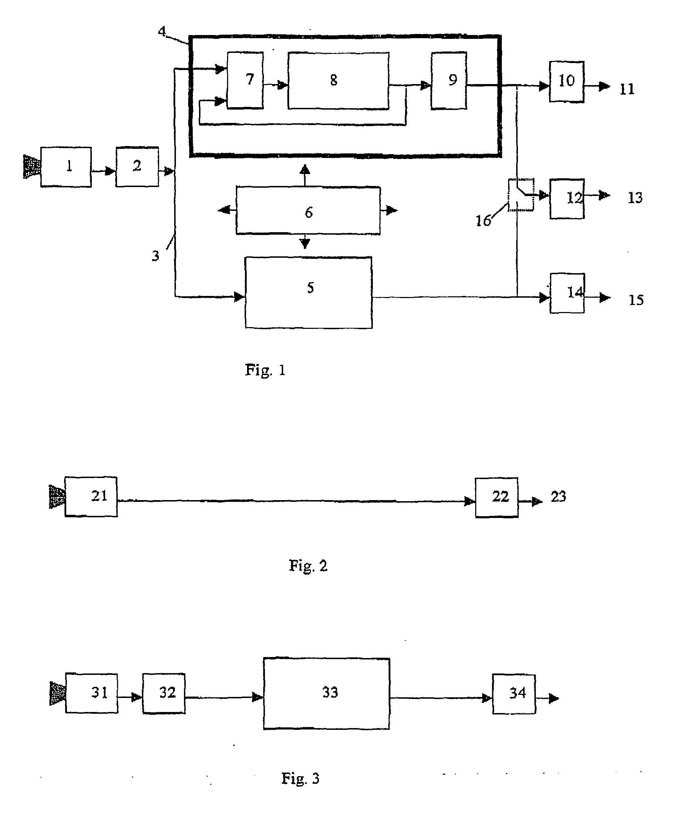

Konvertierungen zwischen den verschiedenen Standards sind möglich, ebenso sind Kameras, die (umschaltbar) verschiedene Standardausgaben ermöglichen, auf dem Markt. Eine Kamera produziert jedoch normalerweise gleichzeitig immer nur Bilder bzw. Videosequenzen in einem Standard-Ausgabeformat. Dies ist schematisch in Fig. 2 veranschaulicht, in welcher Bezugszeichen 21 einen bei der Standard-Bildfrequenz arbeitenden Video-Sensor und Bezugszeichen 23 ein von der Kamera ausgegebenes Videosignal bezeichnen. In Fig. 2 bezeichnet ferner Bezugszeichen 22 den Umsetzer für ein normgerechtes digitales oder analoges Videosignal.

Video-Kameras im industriellen Einsatz für Prüfaufgaben und Qualitätssicherung sind zunächst nicht an diese Standards gebunden, da ihre Bilder lokal in einem Computer verarbeitet werden. Auflösung, Bildformat und Bildfrequenz werden dabei den Erfordernissen der Prüfaufgaben angepaßt und können evtl. sogar während des Einsatzes geändert werden.

Auch Video-Kameras für medizinische Zwecke, beispielsweise bildgebende Ultraschall-Systeme, verwenden Bildfrequenzen, die höher als die vorstehend erwähnten Standard-Bildfrequenzen sind. Um derartige Videosequenzen, die typischerweise eine Bildfrequenz von 68,68 Bildern pro Sekunde aufweisen, dennoch auf Standard-Videorekordern oder Standard-Druckern aufzeichnen bzw. ausdrucken zu können, wird in der US-Patentschrift 5 796 439 ein Verfahren vorgeschlagen, bei dem die Bildfrequenz in eine der Standard-Bildfrequenzen umgewandelt wird. Die Umwandlung erfolgt, indem vorbestimmte vollständige Einzelbilder ("frames") von der Videosequenz mit der höheren Bildfrequenz weggelassen werden.

Hochgeschwindigkeitskameras ("high speed cameras") sind Spezialentwicklungen, meist für den technischwissenschaftlichen Einsatz. Ihr wesentliches Merkmal sind Bildfrequenzen, die deutlich über der von normalen Videokameras liegt. Je nach Anwendung sind Hochgeschwindigkeitskameras mit 1000 bis 10000 Bildern/s oder sogenannte Ultrahochgeschwindigkeitskameras mit bis zu 10 000 000 Bildern/s im Einsatz bekannt. Eine "Echtzeitdarstellung" der Videosequenzen einer Hochgeschwindigkeitskamera ist einerseits technisch nicht möglich, da es keine Monitore gibt, die 1000 Bilder/s und mehr darstellen können, andererseits auch nicht sinnvoll, da ein menschlicher Betrachter diese hohe Bildfrequenz auch nicht anders wahrnimmt als die Standard-Bildfrequenzen von 25 bzw. 30 Hz. Die Videosequenzen einer Hochgeschwindigkeitskamera werden daher zunächst aufgezeichnet und anschließend zur Betrachtung oder Auswertung verlangsamt dargestellt.

Die Aufzeichnung erfolgt dabei analog oder digital auf Magnetband, Platten oder in Halbleiterspeichern (RAMs). Der Einsatz einer Hochgeschwindigkeitskamera erfordert daher zur Visualisierung grundsätzlich eine Speichereinheit. Eine beispielhafte Anordnung eines solchen Hochgeschwindigkeitskamera-Systems veranschaulicht Fig. 3.

In Fig. 3 bezeichnet Bezugszeichen 31 einen Hochgeschwindigkeits-Sensor, Bezugszeichen 32 bezeichnet einen AD-Umsetzer zum Umwandeln der analogen Bildsignale in digitale, Bezugszeichen 33 bezeichnet einen digitalen Bildspeicher zum Speichern der aufgenommenen Hochgeschwindigkeits-Videosequenz, und Bezugszeichen 34 bezeichnet einen Umsetzer sowie den analogen oder digitalen Standard-Videoausgang.

Die Zeitlupe ist ein lange bekanntes und weit verbreitetes Mittel zur Visualisierung schneller Vorgänge. Dabei treten unter anderem folgende Varianten auf.
Variante 1: Eine Videosequenz wird mit einer normalen Videokamera aufgezeichnet (25 Bilder/s) und anschließend verlangsamt wiedergegeben.
Variante 2: Die Aufnahme erfolgt mit einer Hochgeschwindigkeitskamera (>> 25 Bilder/s), die Wiedergabe wird entsprechend verlangsamt.

Während Variante 1 prinzipiell mit jeder Videoaufzeichnung auch nachträglich realisierbar ist, erfordert Variante 2 den zusätzlichen Einsatz einer Hochgeschwindigkeitskamera, die für eine normale Standard-Videoproduktion nicht geeignet ist.

Aus der US-Patentschrift 4 496 995 ist ein Hochgeschwindigkeitskamerasystem bekannt, bei dem während der Aufnahme mit einer hohen Bildfrequenz (bis zu 2000 Bilder/s) eine Kontrollbildsequenz auf einem Standard-Videomonitor verfolgt werden kann. Die Umwandlung der Bildfrequenz wird erreicht, indem die einzelnen Kontrollbilder jeweils aus mehreren Einzelbildern der Hochgeschwindigkeits-Videosequenz zeilen- oder blockweise zusammengesetzt werden. Auf diese Weise kann die Kontrollbildsequenz direkt und ohne Zwischenspeicherung der Videosequenz erzeugt werden.

Die JP-A-11032241 zeigt eine Kamera, die mit variabler Aufnahmegeschwindigkeit betreibbar ist. Bei Betrieb der Kamera mit höherer Bildfrequenz wird jedes Einzelbild entsprechend der höheren Bildfrequenz in einem Speicher M1 ... Mn gespeichert. Die in diesen n Speichern gespeicherten Einzelbilder werden anschließend aufsummiert, um eine Bildsequenz mit einer geringeren Bildfrequenz zu erzeugen. In Abhängigkeit von der höheren Bildfrequenz ist daher eine Anzahl von n Speichern erforderlich.

Der vorliegenden Erfindung liegt die Aufgabe zugrunde, eine Kamera zu schaffen, die für eine gleichzeitige Erzeugung von Videosequenzen mit verschiedenen Bildfrequenzen geeignet ist.

Gemäß der vorliegenden Erfindung wird die Aufgabe durch den Gegenstand von Anspruch 1 gelöst. Die bevorzugten Ausgestaltungen sind Gegenstand der Unteransprüche.

Die vorliegenden Erfindung betrifft somit eine Kamera, die für eine gleichzeitige Erzeugung von Videosequenzen mit 2 verschiedenen Bildfrequenzen $f_V$ und $f_{HS}$, mit $f_{HS} > 20 f_V$, geeignet ist, mit einer Sensoreinheit, welche geeignet ist, durch ein optisches Abbildungssystem abgebildete Videosequenzen mit der Bildfrequenz $f_{HS}$ aufzunehmen, mit einem ersten Speicher, der geeignet ist, die von der Sensoreinheit gewonnenen Videosequenzen mit der Bildfrequenz $f_{HS}$ zu speichern, wobei der Speichervorgang jederzeit automatisch oder manuell gestartet oder gestoppt werden kann, und mit einer Umwandlungsvorrichtung, die die von der Sensoreinheit gewonnenen Videosequenzen mit der Bildfrequenz $f_{HS}$ durch Aufsummieren von Bildern in Videosequenzen mit der Bildfrequenz $f_V$ umwandelt, und einen zweiten Speicher mit einer Speicherkapazität für ein Bild umfasst, der für das Aufsummieren benutzt wird.

Dabei bezeichnet $f_V$ vorzugsweise die Standard-Bildfrequenz von 25 bzw. 30 Hz. $f_{HS}$ bezeichnet vorzugsweise die Hochgeschwindigkeits-Bildfrequenz, die üblicherweise mehr als 1000 beträgt.

Die erfindungsgemäße Kamera beinhaltet somit vorzugsweise die Kombination einer Videokamera und einer Hochgeschwindigkeitskamera. Die erfindungsgemäße Kamera liefert über die Umwandlungsvorrichtung kontinuierlich ein Videobild und ist damit wie eine normale Video- oder Fernsehkamera verwendbar. Zusätzlich speichert die erfindungsgemäße Kamera intern eine Hochgeschwindigkeits-Videosequenz derselben Szene und kann diese zusätzlich oder alternativ zu der Standard-Videosequenz in der gewünschten Zeitlupe wiedergeben.

Beispielsweise kann bei der Übertragung eines Fußballspiels zunächst die Standard-Videosequenz gezeigt werden, welche kontinuierlich von der Umwandlungsvorrichtung erzeugt wird. Spielentscheidende Ereignisse können darauf folgend in Zeitlupe wiedergegeben werden, wobei die Zeitlupen-Videosequenz aus der in dem Speicher gespeicherten Hochgeschwindigkeits-Videosequenz erzeugt wird.

Da die Zeitlupen-Videosequenz aus der Hochgeschwindigkeits-Videosequenz erzeugt wird, weist sie eine sehr hohe zeitliche Auflösung der aufgezeichneten Szene auf.

Weiterhin werden folgende Vorteile erzielt: Für die Erzeugung der Videosequenzen mit den verschiedenen Bildfrequenzen ist nur eine Kamera und somit auch nur eine Bedienungsperson erforderlich. Die gewonnenen Videosequenzen mit den verschiedenen Bildfrequenzen besitzen einen identischen Bildausschnitt, die gleiche Helligkeit, den gleichen Farbton und die gleiche Bildqualität.

Durch das Aufsummieren läßt sich, wenn bei dem verwendeten Summationsalgorithmus die verrauschten Bildanteile nur mit dem Faktor $1/\sqrt{2}$ in die Summation eingehen, zusätzlich die Bildqualität verbessern, da das Rauschen unterdrückt wird.

Im Folgenden wird die vorliegende Erfindung unter Bezugnahme auf die begleitenden Zeichnungen näher erläutert.

 Fig. 1 zeigt eine schematische Darstellung der erfindungsgemäßen Kamera;

 Fig. 2 zeigt eine schematische Darstellung einer bekannten Standard-Videokamera; und

 Fig. 3 zeigt eine schematische Darstellung einer bekannten Hochgeschwindigkeitskamera.

In Fig. 1 bezeichnet Bezugszeichen 1 einen Hochgeschwindigkeits-Bildsensor, der geeignet ist, durch ein optisches Abbildungssystem (nicht dargestellt) abgebildete Videosequenzen mit der Bildfrequenz $f_{HS}$ aufzunehmen. Der Hochgeschwindigkeits-Bildsensor dient als gemeinsame Quelle für die Standard- und die Hochgeschwindigkeits-Videosequenz.

Der verwendete Bildsensor kann ein Photodiodenarray, ein CCD-Sensor, ein CMOS aktive-Pixel-Sensor oder ein Sensor in anderen Technologien sein. Es können schwarzweiß oder farbmaskierte Sensoren verwendet werden. Auch sogenannte Mehrchip-Sensorköpfe (2- oder 3-Chip-Kameras), bei denen das einfallende Licht durch optische Strahlteiler auf verschiedene Sensoren mit unterschiedlichen Farbfiltern gebracht wird, sind für die Erfindung verwendbar.

Die Daten des Bildsensors 1 werden durch einen Analog-Digital-Umsetzer 2 digitalisiert und liegen auf dem digitalen High-Speed-Video-Bus 3 vor. Bezugszeichen 5 bezeichnet einen Speicher, in welchem kontinuierlich Videosequenzen mit der Frequenz $f_{HS}$ gespeichert werden.

Bezugszeichen 4 bezeichnet eine Umwandlungsvorrichtung, die die Videosequenz mit der Bildfrequenz $f_{HS}$ in eine Videosequenz mit der gewünschten Bildfrequenz $f_V$ umwandelt. Dabei beträgt vorzugsweise $f_{HS}$ ein ganzzahliges Vielfaches von $f_V$.

$$f_{HS} = n * f_v$$

Gemäß einer bevorzugten Ausführungsform der vorliegenden Erfindung erfolgt die Umwandlung, indem 2 bis n aufeinanderfolgende Hochgeschwindigkeits-Bilder digital aufsummiert oder aufintegriert und anschließend in der Helligkeit skaliert werden. Somit werden die Summenbilder im zeitlichen Abstand von $1/f_v$ erzeugt, so daß am Ausgang 11 eine kontinuierliche Videosequenz mit der Bildfrequenz $f_v$ entsteht. Durch die Anzahl der summierten Hochgeschwindigkeits-Bilder (1 bis n) für ein Videobild kann eine variable Belichtungszeit der Videobilder erreicht werden.

Bei dem hier verwendeten Summationsverfahren, das im Stand der Technik wohlbekannt ist, werden Bildpunkte aus aufeinanderfolgenden Bildern pixelweise aufsummiert. Insbesondere läßt sich durch eine entsprechende Gewichtung der Rauschanteile das Rauschen unterdrücken.

Gemäß einer möglichen Realisierung der Umwandlungsvorrichtung 4 umfaßt diese einen digitalen Addierer 7, einen Bildspeicher 8 für ein Bild und einen Skalierer (Dividierer) 9. Ein Bild der High-Speed-Sequenz wird zunächst in einem Bildspeicher 8, der eine Speicherkapazität für ein Bild besitzt, zwischengespeichert. Das nächste Bild der High-Speed-Sequenz wird mit dem Addierer 7 zu dem gespeicherten Bild addiert, und das Ergebnis wird wiederum im Bildspeicher 8 festgehalten. Diese Additionsschleife wird solange wiederholt, bis in dem Bildspeicher 8 die Summe von n aufeinanderfolgenden High-Speed-Bildern vorliegt.

Die Skalierung (Division durch die Anzahl n) erfolgt in dem Skalierer 9. Diese skalierte Summe ist ein Bild der gewünschten Videosequenz mit der Frequenz $f_v$.

Zusätzlich werden in dem Speicher 5 kontinuierlich Videosequenzen mit der Frequenz $f_{HS}$ gespeichert. Der Speichervorgang kann jederzeit automatisch oder manuell gestartet oder gestoppt werden. Bei Bedarf werden die gespeicherten Sequenzen in Zeitlupe über den Umsetzer 14 für ein normgerechtes digitales oder analoges Videosignal am Standard-Video Ausgang 15 als Videosequenz ausgegeben.

Die Kapazität des Speichers 5 kann dabei derart bemessen sein, daß er einige Sekunden der Hochgeschwindigkeits-Videosequenz speichert. Vorzugsweise ist der Speicher 5 ein Halbleiterspeicher (RAM). Die Speicher-Kapazität läßt sich durch Verwendung paralleler Speicher auf das gewünschte Maß erhöhen.

Vorzugsweise ist dabei der Speicher 5 als Ringspeicher ausgeführt, bei dem kontinuierlich die ältesten Videosequenzbilder durch die neuesten Videosequenzbilder überschrieben werden.

Die digitalen Bilddaten aus der Umwandlungsvorrichtung 4 oder dem Ringspeicher 5 werden in den Einheiten 10, 12 oder 14 in ein analoges oder digitales Standardformat für TV-Video gebracht. Dabei werden die digitalen Daten gegebenenfalls digital-analog gewandelt und mit den erforderlichen Synchronsignalen versehen. Am Ausgang 11 steht die Standard-Videosequenz, am Ausgang 15 die High-Speed-Sequenz und am Ausgang 13 wahlweise die Standard-Video- oder High-Speed-Sequenz zur Verfügung. Durch einen Umschalter 16 erfolgt vor dem Ausgang 13 die Auswahl zwischen Standard-Video- oder High-Speed-Sequenz.

Zusätzlich umfaßt die erfindungsgemäße Kamera noch eine zentrale Kontroller- und Steuereinheit 6.

**Patentansprüche**

1. Kamera, die für eine gleichzeitige Erzeugung von Videosequenzen mit 2 verschiedenen Bildfrequenzen $f_v$ und $f_{HS}$, mit $f_{HS} \gg f_v$, geeignet ist, wobei $f_{HS} > 20 f_v$ ist,

   - mit einer Sensoreinheit (1), welche geeignet ist, durch ein optisches Abbildungssystem abgebildete Videosequenzen mit der Bildfrequenz $f_{HS}$ aufzunehmen,
   - mit einem ersten Speicher (5), der geeignet ist, die von der Sensoreinheit (1) gewonnenen Videosequenzen mit der Bildfrequenz $f_{HS}$ zu speichern,
   wobei der Speichervorgang jederzeit automatisch oder manuell gestartet oder gestoppt werden kann, und
   - mit einer Umwandlungsvorrichtung (4), die die von der Sensoreinheit (1) gewonnenen Videosequenzen mit der Bildfrequenz $f_{HS}$ durch Aufsummieren von Bildern in Videosequenzen mit der Bildfrequenz $f_v$ umwandelt und einen zweiten Speicher (8) mit einer Speicherkapazität für ein Bild umfasst, der für das Aufsummieren benutzt wird.

2. Kamera nach Anspruch 1, ferner mit einer Zeitlupenvorrichtung, die geeignet ist, die in dem ersten Speicher gespeicherten Videosequenzen mit der Bildfrequenz $f_{HS}$ in Zeitlupe auszugeben.

3. Kamera nach Anspruch 2, ferner mit drei Ausgängen, von denen der erste (11) für die Ausgabe der in der Umwandlungsvorrichtung (4) erzeugten Videosequenzen mit der Bildfrequenz $f_v$, der zweite (15) für die Ausgabe der durch die Zeitlupenvorrichtung verlangsamten Videosequenzen und der dritte (13) für die wahlweise Ausgabe der in der Umwandlungsvorrichtung (4) erzeugten Videosequenzen mit der Bildfrequenz $f_v$ oder der durch die Zeitlupenvorrichtung verlangsamten Videosequenz geeignet ist.

4. Kamera nach einem der vorhergehenden Ansprüche, bei der der erste Speicher (5) ein Ringspeicher ist, bei dem die ältesten Videosequenzbilder durch die neuesten Videosequenzbilder überschrieben werden.

**Claims**

1. A camera which is capable of a simultaneous generation of video sequences having two different image frequencies $f_v$ and $f_{HS}$, with $f_{HS} \gg f_v$, with $f_{HS} > 20 f_v$,

   - having a sensor unit (1), which is capable of recording video sequences imaged by an optical imaging system at the image frequency $f_{HS}$,
   - having a first memory (5), which is capable of storing the video sequences obtained by the sensor unit (1) at the image frequency $f_{HS}$, the storage procedure being able to be started or stopped automatically or manually at any time, and
   - having a conversion device (4), which converts the video sequences obtained by the sensor unit (1) at the image frequency $f_{HS}$ by summation of images into video sequences having the image frequency $f_v$ and comprises a second memory (8) having a storage capacity for an image which is used for the summation.

2. The camera according to Claim 1, also having a slow-motion device, which is capable of outputting the video sequences stored in the first memory at the image frequency $f_{HS}$ in slow motion.

3. The camera according to Claim 2, also having three outputs, of which the first output (11) is capable of the output of the video sequences generated in the conversion device (4) having the image frequency $f_v$, the second output (15) is capable of the output of the video sequences slowed by the slow-motion device, and the third output (13) is capable of the alternate output of the video sequences generated in the conversion device (4) having the image frequency $f_v$ or the video sequence which is slowed by the slow-motion device.

4. The camera according to one of the preceding claims, wherein the first memory (5) is a ring memory, wherein the oldest video sequence images are overwritten by the newest video sequence images.

**Revendications**

1. Caméra apte à générer simultanément des séquences vidéo ayant 2 fréquences d'image différentes $f_v$ et $F_{HS}$, avec $f_{HS} \gg f_v$, sachant que $f_{HS} > 20\, f_v$, comportant

   - une unité de détection (1) qui est apte à prendre des séquences vidéo représentées par un système de représentation optique à la fréquence d'image $f_{HS}$,
   - une première mémoire (5) qui est apte à enregistrer les séquences vidéo prises par l'unité de détection (1) à la fréquence d'image $f_{HS}$, le processus d'enregistrement pouvant être à tout moment démarré ou arrêté automatiquement ou manuellement, et
   - un dispositif de conversion (4) qui convertit les séquences vidéo prises par l'unité de détection (1) à la fréquence d'image $f_{HS}$ en convertissant les images des séquences vidéo à la fréquence d'image $f_v$ et une deuxième mémoire (8) ayant une capacité d'enregistrement pour une image et qui est utilisée pour l'additionnement.

2. Caméra selon la revendication 1, comportant en outre un dispositif de photochronographe qui est apte à diffuser au ralenti les séquences vidéo enregistrées dans la première mémoire à la fréquence d'image $f_{HS}$.

3. Caméra selon la revendication 2, comportant en outre trois sorties dont la première (11) est apte à diffuser les séquences vidéo générées dans le dispositif de conversion (4) à la fréquence d'image $f_v$, la deuxième (15) à diffuser les séquences vidéo ralenties par le dispositif de photochronographe et la troisième (13) à diffuser au choix les séquences vidéo générées dans le dispositif de conversion (4) à la fréquence d'image $f_v$ ou la séquence vidéo ralentie par le dispositif de photochronographe.

4. Caméra selon une des revendications précédentes, dans laquelle la première mémoire (5) est une mémoire annulaire dans laquelle les anciennes images de séquences vidéo sont écrasées par les nouvelles images de séquences vidéo.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5796439 A
- US 4496995 A
- JP 11032241 A